# EUROPÄISCHE PATENTSCHRIFT

(11) **EP 1 075 367 B1**
(45) Veröffentlichungstag und Bekanntmachung des Hinweises auf die Patenterteilung: **11.09.2002**
(21) Anmeldenummer: 99917677.9
(22) Anmeldetag: 22.04.1999
(51) Int. Cl.: B29B 9/06, B29B 17/00, B29C 47/38

(54) **VORRICHTUNG UND VERFAHREN ZUM KONTINUIERLICHEN AGGLOMERIEREN VON KUNSTSTOFFGUT, INSBESONDERE ZU RECYCLINGZWECKEN**
DEVICE AND METHOD FOR CONTINUOUSLY AGGLOMERATING PLASTIC MATERIAL, ESPECIALLY FOR RECYCLING PURPOSES
DISPOSITIF ET PROCEDE POUR L'AGGLOMERATION EN CONTINU DE PRODUITS EN MATIERE PLASTIQUE, NOTAMMENT A DES FINS DE RECYCLAGE

(30) Priorität: 06.05.1998 AT 74798
(43) Veröffentlichungstag der Anmeldung: 14.02.2001
(73) Patentinhaber: BACHER, Helmut, A-4490 St. Florian (AT); SCHULZ, Helmuth, A-4490 St. Florian (AT); WENDELIN, Georg, A-4033 Linz (AT)
(72) Erfinder: BACHER, Helmut, A-4490 St. Florian (AT); SCHULZ, Helmuth, A-4490 St. Florian (AT); WENDELIN, Georg, A-4033 Linz (AT)
(74) Vertreter: Wildhack, Helmut, Dipl.-Ing. Dr.
(86) Internationale Anmeldenummer: AT9900099
(87) Internationale Veröffentlichungsnummer: WO99056925

(56) Entgegenhaltungen:
- EP-A- 0 735 945
- WO-A-93/15892
- DE-B- 1 037 698
- US-A- 3 942 774
- US-A- 4 981 364

## Beschreibung

Die Erfindung bezieht sich auf eine Vorrichtung zum kontinuierlichen Agglomerieren von Kunststoffgut, insbesondere zu Recyclingzwecken, mit einer in einem Gehäuse gelagerten, durch einen Antrieb zu einer Drehbewegung um ihre Achse angetriebenen Aggfomerierschnecke, welche das Kunststoffgut lediglich zusammenbackt, aber nicht plastifiziert und der das zu behandelnde Gut durch eine Einbringeöffnung des Gehäuses zugeführt wird und die das agglomerierte Gut durch eine Austrittsöffnung aus dem Gehäuse ausdrückt, wobei das Verhältnis von wirksamer Länge der Agglomerierschnecke zu ihrem Nenndurchmesser kleiner ist als 16. Als "wirksame Länge" der Agglomerierschnecke ist hiebei stets jener Abschnitt derselben zu verstehen, welcher zwischen dem der Austrittsöffnung benachbarten Rand der Einbringeöffnung und der ihr am nächsten liegenden Austrittsöffnung liegt

Die allgemein bekannten Agglomeriervorrichtungen der eingangs beschriebenen Art haben einen von der Agglomerierschnecke und ihrem Gehäuse gebildeten Extruder, dessen wirksame Länge wesentlich kürzer ist als bei üblichen Kunststoffextrudern auf dem Recyclinggebiet, bei denen das Verhältnis von wirksamer Extruderschneckenlänge zum Schneckendurchmesser wesentlich größer ist als 16, zumeist 25 bis 35, und bei denen eine Plastifizierung des Kunststoffgutes stattfindet. Zum Unterschied von solchen Plastifiziervorrichtungen wird bei einer Agglomeriervorrichtung dem zu behandelnden Kunststoffgut, das in vorzerkleinerter Form in die Einbringeöffnung des Gehäuses der Agglomerierschnecke eingebracht wird, nur soviel Energie zugeführt, daß das Kunststoffmaterial lediglich zusammenbackt, aber nicht plastifiziert wird. Es findet also gleichsam eine Haftung der einzelnen Kunststoffteilchen aneinander bzw. eine Sinterung des Kunststoffmateriales statt. Das so agglomerierte Kunststoffmaterial wird durch die Austrittsöffnung des Schneckengehäuses ausgedrückt und sodann in fördermögliches Agglomerat zerteilt. Dieses Agglomerat ist zwar rieselförmig, aber hinsichtlich der Größe und Form seiner Teilchen unterschiedlich. Vorteilhaft ist hiebei, daß für den Agglomeriervorgang nur etwa die Hälfte der Energie notwendig ist, welche für eine Plastifizierung des gleichen Materiales aufgebracht werden muß. Bei dem Massenkunststoff Polyethylen sind z.B. für eine Plastifizierung etwa 0,25 bis 0,3 kWh/kg notwendig, für das Agglomerieren jedoch lediglich etwa 0,12 bis 0,15 kWh/kg. In diesen Werten sind die Abstrahl- und Reibungsverluste bereits enthalten. Zusätzlich zu dieser Energieeinsparung ergibt sich als weiterer Vorteil, daß aufgrund der vergleichsweise niedrigeren Verarbeitungstemperatur das Kunststoffmaterial thermisch geschont wird, d.h., daß die Molekülketten des Kunststoffmateriales weniger stark abgebaut werden als bei einer Plastifizierung dieses Materials. Besonders interessant ist das Agglomerieren für die Kunststoffrecycling-Industrie, wo sehr oft der Fall eintritt, daß gattungsreine Kunststoffe, jedoch mit unterschiedlichen Verarbeitungsparametern, in Mischsilos zusammengeführt werden und erst in der Folge diese Mischung zu einem üblichen, uniformen Granulat verarbeitet wird. Randabschnitte der Folienindustrie werden z.B. sehr oft sofort agglomeriert und dem Verarbeitungsextruder zugeführt. Hiebei ist es wichtig, daß das Schüttgewicht des so erhaltenen Agglomerates annähernd dem des üblichen Granulates entspricht, sodaß es in pneumatischen Förderleitungen bzw. im Einfülltrichter eines Extruders nicht zu einer Entmischung zwischen dem üblichen Granulatanteil und dem Agglomeratanteil des zu verarbeitenden Gutes kommt

Die Erfindung setzt sich zur Aufgabe, eine Vorrichtung zum kontinuierlichen Agglomerieren von Kunststoffgut der eingangs geschilderten Art hinsichtlich Energieeinsparung und Qualität des erhaltenen Agglomerates zu verbessem. Die Erfindung löst diese Aufgabe dadurch, daß das Verhältnis von wirksamer Länge der Agglomerierschnecke zu ihrem Nenndurchmesser 4,5 bis 12 beträgt, und daß die Agglomerierschnecke vor der von mehreren an der Stirnseite des Gehäuses angeordneten Kanälen gebildeten Austragsöffnung einen mit der Agglomerierschnecke mitdrehenden Austragkopf aufweist, welcher die Austrittsöffnungen begrenzende Schneckengänge aufweist, deren Gangzahl größer ist als jene der Agglomerierschnecke, wobei das Gehäuse im Bereich dieses Austragkopfes an seiner Innenwand Nuten aufweist, deren Richtung sich mit jener der Schneckengänge des Austragkopfes kreuzt und die in Abstand vom äußeren Stirnende des Austragkopfes enden, sodaß dieser Austragkopf das von der Agglomerierschnecke bereits weitgehend agglomerierte Gut weiter verdichtet und agglomeriert und mehrere Agglomeratstränge aus den Kanälen des Austragkopfes austreten. Die im Bereich des Austragkopfes vergrößerte Gangzahl der Agglomerierschnecke erzielt eine intensive Verdichtung und Agglomerierung des verarbeiteten Kunststoffgutes. Da das Verhältnis von wirksamer Länge der Agglomerierschnecke zu ihrem Nenndurchmesser an sich schon geringer ist als bei üblichen Agglomeriervorrichtungen, insbesondere dann, wenn dieses Verhältnis gemäß einer bevorzugten Ausführungsform der Erfindung 4,5 bis 8,5 beträgt, und somit auch der Austragkopf eine verhältnismäßig geringe Länge hat, sind die auf das Kunststoffmaterial im Bereich des gesamten Schneckengehäuses, insbesondere im Bereich des Austragkopfes, auftretenden hohen Beanspruchungen verhältnismäßig kurzzeitig, sodaß größere thermische Schädigungen des verarbeiteten Kunststoffes vermieden werden. Vorteilhaft ist weiter, daß mehrere Austrittsöffnungen am Stirnende des Gehäuses liegen und nicht - wie beim erwähnten Stand der Technik - eine einzige Öffnung an der Seitenwand des Gehäuses angeordnet ist, sodaß eine seitliche Umlenkung des Kunststoffgutes im Bereich seines Austrittes aus dem Gehäuse vermieden ist. Dies bewirkt eine Energie-Einsparung und trägt wesentlich zur Homogenisierung des austretenden, agglomerierten Kunststoffgutes bei. Es wird daher eine gleichmäßige und verläßliche Qualität des aus den Austrittsöffnungen austretenden agglomerierten Kunststoffgutes erhalten. Hiezu trägt auch wesentlich bei, daß die von der Agglomerierschnecke bereits weitgehend agglomerierte Masse durch den Austragkopf weiter verdichtet und agglomeriert wird, da die Schneckengänge des Austragkopfes in Summe ein Aufnahmevolumen bilden, das geringer ist als jenes der Agglomerierschnecke. Dies läßt sich z.B. in einfacher Weise dadurch erreichen, daß die Nuten eine geringere Tiefe haben als die von den Gängen der Agglomerierschnecke gebildeten Kanäle. Durch die mit den Schneckengängen des Austragkopfes zusammenarbeitenden Nuten werden Kunststoffteilchen, die noch nicht genügend zusammengesintert sind, in diesem Bereich einer kurzzeitigen extremen Scherung unterzogen, was die Sinterung begünstigt. Frerridpartikel werden durch die auftretenden Scherkräfte zerkleinert und so der Austragsbereich von Verstopfungen frei gehalten.

Bei einer Vorrichtung zum Granulieren von Kunststoffen ist es bekannt (WO 93/15892), am austragsseitigen Ende einer Plastifizierschnecke mehrere Längs- oder Spiralkanäle anzuordnen, durch welche das plastifizierte Kunststoffmaterial ausgedrückt wird.

Durch die vergrößerte Gangzahl der Schneckengänge des Austragkopfes im Vergleich zu der Gangzahl der Agglomerierschnecke ergibt sich eine Aufteilung des geförderten Gutes auf mehrere Einzelstränge. Dies hat den Vorteil, daß durch Wahl dieser Gangzahl der Schneckengänge des Austragkopfes und insbesondere durch Wahl der Größe und der Querschnittsform der zwischen diesen Schneckengängen verbleibenden Kanäle Einfluß genommen werden kann auf den Querschnitt der austretenden Gutstränge und damit auf den Querschnitt bzw. die Größe der herzustellenden Agglomeratteilchen. Dies und der Umstand, daß die Austrittsöffnungen für das agglomerierte Gut am Stimende des Gehäuses der Agglomerierschnecke angeordnet sind, ermöglicht es, gemäß einer bevorzugten Ausführungsform der Erfindung an die Austragsöffnungen eine Zerkleinerungsvorrichtung, Insbesondere eine Granuliervorrichtung, für das austretende Agglomerat unmittelbar anzuschließen, z.B. umlaufende Abschlagmesser, eine Naßmühle od.dgl. Der unmittelbare Anschluß kann so gestaltet sein, daß Abschlagmesser od.dgl. über die äußere Stirnfläche des Austragkopfes und damit über die Enden der Austrittsöffnungen streichen. Dies ist beim bekannten Stand der Technik nicht möglich, da die seitlich am Extruderrohr angeordnete Austragsöffnung dies nicht zuläßt.

Durch Wahl der Form und Größe des Querschnittes der Nuten im Austragkopfbereich des Gehäuses läßt sich die Einwirkung auf das zu verarbeitende Kunststoffgut beeinflussen. Im allgemeinen weicht daher der Querschnitt der Nuten hinsichtlich Form und Größe vom Querschnitt der von den Schneckengängen des Austragkopfes begrenzten Kanäle ab. Eine besonders günstige Ausführungsform besteht hiebei darin, daß das Profil der Nuten, im Schnitt normal zur Achse der Agglomerierschnecke gesehen, sägezahnartig verläuft. Dies ergibt eine besonders starke Scherwirkung.

Dadurch, daß die Nuten vor dem Stimende des Austragkopfes enden, wird vermieden, daß auch über die Nuten Agglomeratstränge aus dem Gehäuse austreten, was insbesondere dann unzweckmäßig wäre, wenn- wie oben erwähnt - der Nutenquerschnitt vom Querschnitt der von den Schneckengängen des Austragkopfes begrenzten Kanäle abweicht, denn dies würde ungleichmäßige Querschnitte der aus dem Gehäuse austretenden Agglomeratstränge ergeben, sodaß kein gleichmäßig rieselfähiges Gut mit konstantem Schüttgewicht erhalten werden könnte. Wohl aber erstrecken sich im Rahmen der Erfindung die Nuten über einen von den Austrittsöffnungen in Abstand liegenden wesentlichen Abschnitt, z.B. etwa die Hälfte, der axialen Länge des Austragkopfes, um eine möglichst hohe Scherwirkung auf das behandelte Gut zu erzielen. Auf diese Weise wird eine einheitliche Größe und Form der Agglomeratteilchen erzielt, sodaß ein gleichmäßig rieselfähiges Gut mit konstantem Schüttgewicht erhalten wird.

Durch Versuche hat es sich herausgestellt, daß sich besonders gute Ergebnisse hinsichtlich der Agglomerierung des Kunststoffgutes erzielen lassen, wenn das Verhältnis von axialer Länge des Austragkopfes zum Nenndurchmesser der Agglomerierschnecke 0,4 bis 1 beträgt. Der Austragkopf und der in ihm befindliche, eine vergrößerte Gangzahl aufweisende Schneckenabschnitt ist daher - gemessen in Axialrichtung der Schneckewesentlich kürzer als der restliche Abschnitt der wirksamen Länge der Agglomerierschnecke.

Aus Fertigungs- und Ersatzgründen ist es im Rahmen der Erfindung zweckmäßig, wenn der Austragkopf einen eigenen Bauteil bildet, der mit der Agglomerierschnecke lösbar drehschlüssig verbunden ist, also mit ihr nicht einstückig ausgebildet ist. Aus den gleichen Gründen ist gemäß einer bevorzugten Ausführungsform der Erfindung der Austragkopf in einem eigenen Abschnitt des Gehäuses gelagert, der mit dem restlichen Gehäuse lösbar, jedoch dicht verbunden ist. Der dichte Anschluß ist erforderlich, um einen Materialaustritt trotz der im Gehäuse herrschenden hohen Drücke, die 300 bar und mehr betragen können, zu vermeiden.

Bei der eingangs beschriebenen bekannten Konstruktion erfolgt die Befüllung des Schneckengehäuses gravimetrisch, also durch Hineinfallen des zugeführten Kunststoffgutes in die Einbringeöffnung unter Schwerkrafteinfluß. Nach Durchlaufen der wirksamen Schneckenlänge wird das agglomerierte Kunststoffgut durch eine seitliche Austrittsöffnung des Gehäuses ausgedrückt und sodann auf die gewünschte Agglomeratgröße zerkleinert. Dies hat außer dem bereits erwähnten Nachteil der Umlenkung des Kunststoffgutflusses den weiteren Nachteil, daß infolge der gravimetrischen Befüllung stets Ungleichmäßigkeiten bei der Befüllung der Schnecke auftreten, was eine ungleichmäßige Dichte im austretenden Agglomeratstrang zur Folge hat. Im Rahmen der Erfindung läßt sich dieser Nachteil dadurch vermeiden, daß die Einbringeöffnung in Strömungsverbindung mit einer Einrichtung steht, die das zu agglomerierende Gut in die Einbringeöffnung stopft. Eine solche Einrichtung kann z.B. im Rahmen der Erfindung so gestaltet sein, daß das Gehäuse der Agglomerierschnecke tangential an einen Behälter angeschlossen ist, in dessen Bodenbereich um eine vertikale Achse umlaufende Messer angeordnet sind, wobei der Antrieb für die Agglomerierschnecke und der Austragkopf an einander entgegengesetzten Stirnenden der Agglomerierschnecke angeordnet sind. Die umlaufenden Messer bewirken unter anderem die eingangs erwähnte Stopfwirkung auf das zu verarbeitende Gut. Eine solche Stopfwirkung kann jedoch auch z.B. durch eine Stopfschnecke erzielt werden, welche in einem an die Einbringeöffnung angeschlossenen Einfülltrichter für das zu verarbeitende Gut angeordnet ist. Eine weitere Möglichkeit der Ausbildung einer solchen Stopfeinrichtung besteht in einem mit zumindest einer Einbringeöffnung des Gehäuses in Strömungsverbindung stehenden Einwellen- oder Mehrwellenzerkleinerer, dessen umlaufende Messer die Stopfwirkung ausüben.

Bei einer tangentialen Anordnung des Gehäuses der Agglomerierschnecke in Bezug auf einen mit einer Zerkleinerungsvorrichtung versehenen Behälter liegt die Einbringeöffnung für die Befüllung des Gehäuses zwischen dem Schneckenantrieb und dem Austragkopf, sodaß also die Befüllung des Gehäuses durch eine in der Seitenwand des Schneckengehäuses angeordnete Einbringeöffnung erfolgt. Aber auch dann, wenn die Befüllung des Gehäuses stirnseitig erfolgt, also etwa bei einem radialen oder außermittigen Anschluß des Schneckengehäuses an einen Zerkleinerungsbehälter für das zu bearbeitende Gut, läßt sich die erwähnte Anordnung der Zerkleinerungsvorrichtung am anderen Stimende des Gehäuses problemlos durchführen, etwa wenn zueinander koaxiale Antriebswellen für die Schnecke und die Zerkleinerungsvorrichtung verwendet werden.

Unter "Schneckengängen" sind die wendelartig verlaufenden Rippen der Schnecke zu verstehen, zwischen denen - je nachdem ob die Schnecke ein- oder mehrgängig ist - ein oder mehrere Kanäle verlaufen, über welche das Material von der Schnecke transportiert wird. Im allgemeinen ist die bei der vorliegenden Erfindung verwendete Agglomerierschnecke eingängig, der Austragkopf hat hingegen - wie erwähnt- eine mehrgängige Schnecke.

Das erfindungsgemäße Verfahren zum kontinuierlichen Agglomerieren von Kunststoffgut mittels einer zur Drehbewegung um ihre Achse angetriebenen Agglomerierschnecke, die das agglomerierte Gut aus ihrem Gehäuse ausdrückt und ein Verhältnis von wirksamer Länge zu Nenndurchmesser hat, das kleiner ist als 16, kennzeichnet sich dadurch, daß die Agglomerierschnecke, deren Verhältnis von wirksamer Länge zu Nenndurchmesser 4,5 bis 12 beträgt, das Gut weitgehend agglomeriert und zu einem an sie anschließenden Austragkopf fördert, der mit der Agglomerierschnecke mitgedreht wird und Schneckengänge hat, deren Gangzahl größer ist als jene der Agglomerierschnecke, sodaß die Schneckengänge des Austragkopfes das Gut weiter verdichten und agglomerieren, wobei mittels Nuten in der dem Austragkopf umgebenden Wand des Gehäuses eine Scherwirkung auf das Gut ausgeübt wird. Vorzugsweise wird hiebei so vorgegangen, daß die Scherwirkung mittels Nuten erzeugt wird, die einen sägezahnartigen Querschnitt haben.

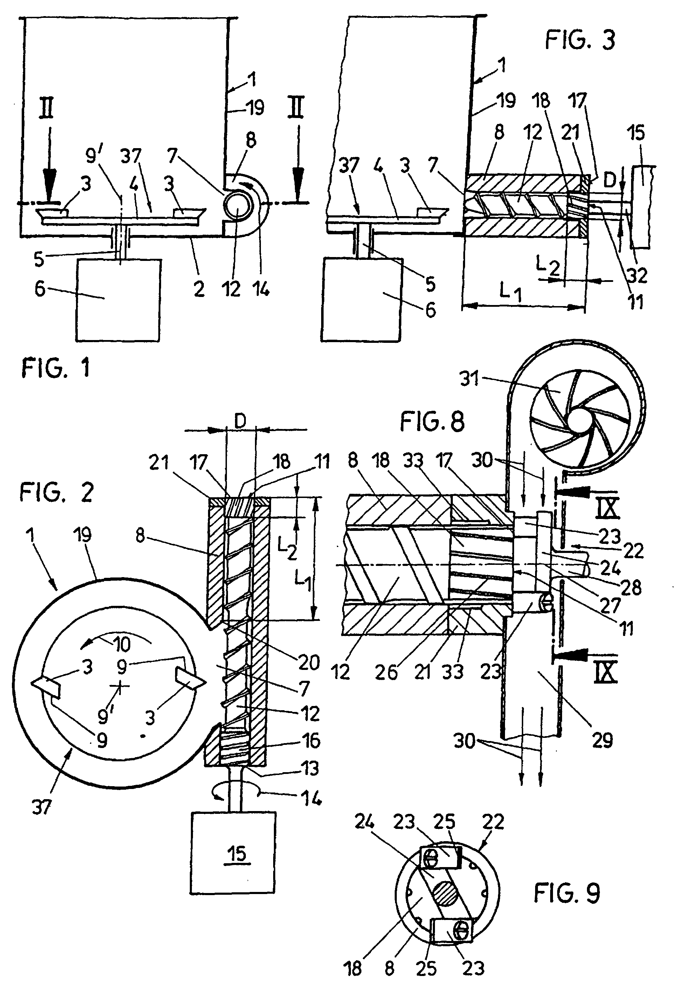

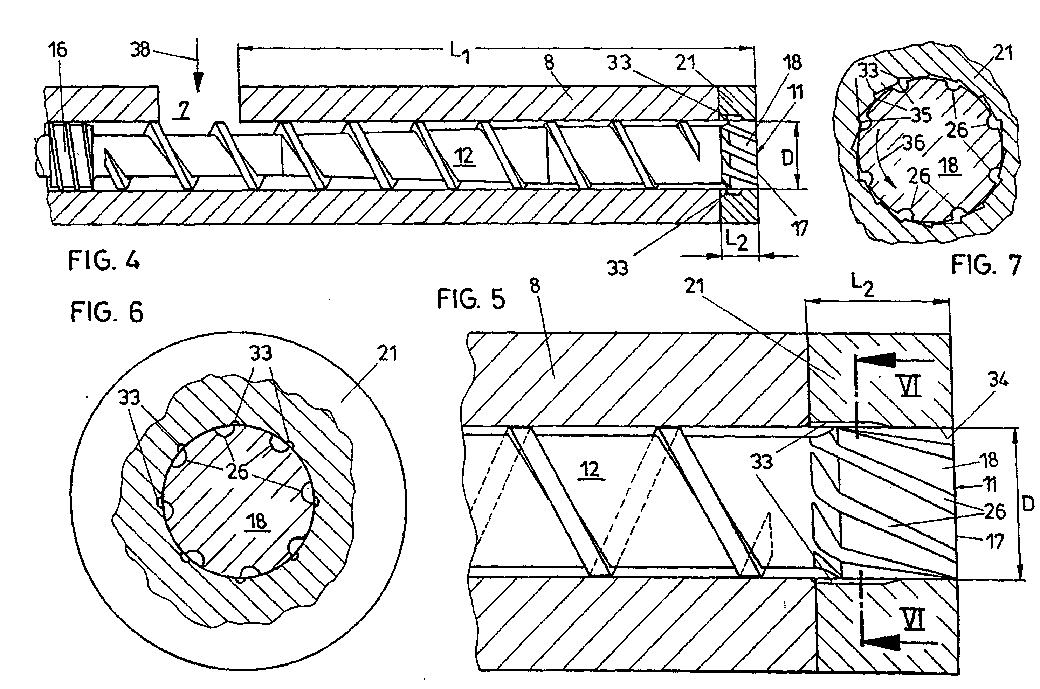

Weitere Kennzeichen und Vorteile der Erfindung ergeben sich aus der Beschreibung von Ausführungsbeispielen der erfindungsgemäßen Vorrichtung, welche in der Zeichnung schematisch dargestellt sind. Fig. 1 zeigt einen Vertikalschnitt durch eine erste Ausführungsform der Erfindung. Fig. 2 ist ein Schnitt nach der Linie II - II der Fig. 1. Fig. 3 zeigt eine zweite Ausführungsform im Vertikalschnitt. Fig. 4 zeigt in größerem Maßstab einen Schnitt durch die Agglomerierschnecke und ihr Gehäuse bei einer Ausführungsform gemäß den Fig. 1 und 2. Fig. 5 zeigt in nochmals vergrößertem Maßstab die Verhältnisse am austragsseitigen Ende der Agglomerierschnecke im Axialschnitt. Fig. 6 ist ein Schnitt nach der Linie VI - VI der Fig. 5. Fig. 7 zeigt eine Ausführungsvariante zu Fig. 6. Fig. 8 zeigt die Anordnung einer Zerkleinerungsvorrichtung am austragsseitigen Ende der Agglomerierschnecke im Schnitt und Fig. 9 ist ein Schnitt nach der Linie IX - IX durch ein Detail der Fig. 8.

Bei der Ausführungsform nach den Fig. 1 und 2 hat die Vorrichtung einen Behälter 1 für das zu bearbeitende Kunststoffgut, insbesondere thermoplastisches Material, jedoch gegebenenfalls auch mit in der Regel geringen Beimengungen duroplastischen Materiales, welche im Endprodukt als Füllstoffe wirken. Dieses Material wird von oben durch eine Öffnung mittels einer nicht dargestellten Beschickungsvorrichtung in den Behälter 1 eingebracht und im Behälter mittels um eine vertikale Achse im Bereich des Bodens 2 des Behälters 1 umlaufender Werkzeuge 3, insbesondere Messer, zerkleinert, gemischt, erwärmt und vorverdichtet, wobei gegebenenfalls auch eine Trocknung des Materiales stattfindet. Die Werkzeuge 3 sind auf einer Rotorscheibe 4, die über eine mittige Welle 5 von einem außerhalb des Behälters 1 angeordneten Antriebes 6 zur Drehung angetrieben wird, so angeordnet, daß sie das zerkleinerte Gut in eine Einbringeöffnung 7 eines Schneckengehäuses 8 drücken und derart dieses Gehäuse 8 stopfend befüllen. Hiezu können die Werkzeuge 3 mit schräg verlaufenden Arbeitskanten 9 (Fig. 2) auf der Rotorscheibe 4 so montiert sein, daß sich die erwähnte Stopfwirkung beim Umlauf der Werkzeuge 3 um die mittige Achse 9' in Richtung des Pfeiles 10 spachtelartig ergibt.

Im Gehäuse 8 ist eine Agglomerierschnecke 12 gelagert, durch welche das durch die Einbringeöffnung 7 in das Gehäuse 8, z.B. in Flockenform, eingedrückte Kunststoffgut im Gehäuse 8 agglomeriert und dieses agglomerierte Gut durch eine Austrittsöffnung 11 aus dem Gehäuse 8 ausgedrückt wird. Hiebei erfolgt keine Plastifizierung des bearbeiteten Kunststoffmateriales, sondern nur eine Zusammenbackung benachbarter Kunststoffteilchen, ähnlich einer Sinterung, was bei im Vergleich zu einer Plastifizierung wesentlich niedrigeren Bearbeitungstemperaturen im Gehäuse 8 erfolgt. Die Schnecke 12 wird am einen Stimende 13 in Richtung des Pfeiles 14 durch einen Antrieb 15 zur Drehung um ihre Längsachse angetrieben. Der im Bereich des Stirnendes 13 der Schnecke 12 liegende Abschnitt derselben ist als Dichtgewinde 16 mit vergrößerter Gangzahl ausgebildet, sodaß das über die Einbringeöffnung 7 in das Gehäuse 8 eingebrachte Kunststoffmaterial nicht durch das Stirnende 13 austreten kann, sondern verläßlich in Richtung zum anderen Stimende 17 gefördert wird. Dort ist die Schnecke 12 mit einem Austragskopf 18 versehen, der ebenfalls mit Schneckengängen ausgebildet ist, deren Steigung jedoch wesentlich größer ist als jene im übrigen Abschnitt der Schnecke 12, wobei der Austragskopf 18 auch eine im Vergleich zum Restabschnitt der Schnecke 12 vergrößerte Gangzahl pro Längeneinheit aufweist. Im dargestellten Ausführungsbeispiel ist die Agglomerierschnecke 12 eingängig, die am Austragkopf 18 angeordneten Schneckengänge haben hingegen acht Gänge (siehe Fig. 6).

Wie aus Fig. 2 ersichtlich, liegt die Schnecke 12 bzw. das sie lagernde Schneckengehäuse 8 zumindest annähernd tangential zum Umfang der Mantelwand 19 des Behälters 1, sodaß die Einbringeöffnung 7 die Seitenwand des Schneckengehäuses 8 durchsetzt und zwischen den beiden Stirnenden 13, 17 der Schnecke 12 liegt. Wesentlich für die Wirkung der Schnecke 12 als Agglomerierschnecke ist, daß ihr Verhältnis von wirksamer Schneckenlänge L₁ zu ihrem Nenndurchmesser D (gleich dem Innendurchmesser des Schneckengehäuses 8) wesentlich kleiner ist als bei üblichen Plastifizierschnecken. Bei Ausführungsformen nach den Fig. 1 und 2 liegt dieses Verhältnis L₁ /D zwischen 4,5 und 12, vorzugsweise zwischen 4,5 und 8,5. Im konkreten Fall der Fig. 2 beträgt dieses Verhältnis 6. In Fig. 2 ist dieses Verhältnis maßstäblich eingezeichnet, die übrigen Bauteile der Vorrichtung, insbesondere der Behälter 1 sind selbstverständlich nicht maßstäblich eingezeichnet, um die Übersicht zu erhöhen.

Unter "wirksame Schneckenlänge" ist hiebei jene Länge der Schnecke 12 zu verstehen, welche zwischen dem der Austrittsöffnung 11 benachbarten Rand 20 der Einbringeöffnung 7 und der Austrittsöffnung 11 liegt.

Der Austragskopf 18 bildet einen von dem restlichen Abschnitt der Schnecke 12 gesonderten Bauteil, der jedoch mit der Schnecke 12 lösbar und drehschlüssig verbunden ist. Dies ermöglicht eine leichte Auswechslung dieses hochbeanspruchten Bauteiles. Aus den gleichen Gründen ist der Austragskopf 18 in einem Gehäuseabschnitt 21 gelagert, der mit dem restlichen Gehäsue 8 lösbar, jedoch dicht verbunden ist, um die im Gehäuse 8 herrschenden hohen Drücke aufnehmen zu können. Die lösbare Verbindung zwischen dem Austragskopf 18 und dem restlichen Schneckenabschnitt 12 kann z.B. eine Gewindeverbindung sein, wobei die Gewinderichtung so gewählt ist, daß sich diese Gewindeverbindung bei der Drehung der Schnecke im Betrieb nicht löst. Für die lösbare und dichte Verbindung zwischen den Gehäuseteilen 8, 21 können herkömmliche Flanschverbindungen od.dgl. herangezogen werden.

In Achsrichtung der Schnecke 12 gemessen, ist der Austragskopf 18 wesentlich kürzer als die wirksame Schneckenlänge L₁. Versuche haben ergeben, daß ein günstiges Verhältnis der axialen Länge L₂ des Austrangskopfes zum Nenndurchmesser der Agglomerierschnecke 12, also zum Innendurchmesser des Gehäuses 8, zwischen 0,4 und 1 liegt.

An das äußere Stirnende des Austragskopfes 18 ist eine Zerkleinerungsvorrichtung 22 (Fig. 8, 9) für die aus dem Austragskopf 18 austretenden Agglomeratstränge unmittelbar angeschlossen, welche diese Stränge auf die gewünschte Größe der Agglomeratteilchen unterteilt. Ein Beispiel einer solchen Zerkleinerungsvorrichtung 22 ist in den Fig. 8 und 9 dargestellt. Diese Zerkleinerungsvorrichtung 22 hat zumindestens ein, vorzugsweise mehrere, Messer 23, die als Granuliermesser ausgebildet sind und auf einem gemeinsamen-Messerträger 24 so montiert sind, daß sie mit ihren Schneidkanten 25 über die Stirnfläche 17 des Austragkopfes 18 in jenem Bereich streichen, in welchem die zwischen den einzelnen Schneckengängen des Austragkopfes 18 liegenden Kanäle 26 des Austragkopfes 18 an dem Stimende 17 desselben münden. Dadurch werden aus den dort austretenden Agglomeratsträngen Granulatteilchen abgetrennt, deren Größe abhängig ist vom Verhältnis der Geschwindigkeit der aus den Kanälen 26 austretenden Kunststoffstränge zur Umlaufgeschwindigkeit der Messer 23. Diese Messer 23 werden zum Umlauf um die Achse 27 der Schnecke 12 über eine den Messerträger tragende Welle 28 von einem nicht dargestellten Antrieb angetrieben. Die Drehzahl der Welle 28 ist größer als die Drehzahl der Agglomerierschnecke 12 und des Austragkopfes 18. Die von den Messem 23 abgeschlagenen Granulatteilchen werden mittels eines Kühlluftstromes abgeführt, welcher in einem Kanal 29 in Richtung der Pfeile 30 strömt und von einem Gebläse 31 erzeugt wird.

Eine andere Grundanordnung der Vorrichtung ist in Fig. 3 dargestellt. Hiebei ist das Schneckengehäuse 8 im Bodenbereich des Behälters 1 mit seinem einen Stirnende an die Mantelwand 19 des Behälters 1 angeschlossen, sodaß die umlaufenden Werkzeuge 3 eine stimseitig angeordnete Einbringeöffnung 7 des Gehäuses 8 stopfend mit dem zu verarbeitenden Gut befüllen. Die Anordnung kann so gewählt sein, daß die im Gehäuse 8 gelagerte Schnecke 12 mit ihrer Achse radial zum Kreisquerschnitt des Behälters 1 angeordnet ist, jedoch sind auch exzentrische Anordnungen möglich, derart, daß die Einbringeöffnung 7 gegen die Zulaufseite der umlaufenden Werkzeuge 3 zu aus der radialen Anordnung versetzt ist. Bei dieser Konstruktion erfolgt der Antrieb der Schnecke 12 vom äußeren Stirnende 17 her mittels einer daran befestigten Welle 32, welche durch den Antrieb 15 angetrieben wird. Dies schließt nicht aus, daß auch bei einer solchen Konstruktion eine Zerkleinerungsvorrichtung 22 der Grundkonstruktion nach den Fig. 8 und 9 Anwendung findet, es muß dann lediglich die Welle 28 für den Antrieb der Zerkleinerungsvorrichtung 22 als die Welle 32 umgebende und im Vergleich zur Welle 32 rascher drehende Hohlwelle ausgebildet werden.

In Fig. 4 ist eine Agglomerierschnecke 12 samt ihrem Gehäuse 8 gemäß einer Ausführungsform nach den Fig. 1 und 2 in größerem Maßstab und maßstäblich dargestellt. Das Verhältnis von wirksamer Schneckenlänge L₁ zum Nenndurchmesser D der Schnecke beträgt hiebei 7,55, das Verhältnis der axialen Länge des Austragkopfes 18 zum Nenndurchmesser D der Schnecke beträgt 0,55. Wie ersichtlich, ist die Schnecke 12 mit einem in Richtung zum Stimende 17 zunehmenden Kerndurchmesser ausgebildet, um den Druck auf das zu verarbeitende Material allmählich zu erhöhen. Wie sich gezeigt hat, arbeitet die Schnecke 12 jedoch zumeist fast adiabatisch, d.h. die Arbeitstemperatur der Schnecke 12 bleibt annähernd konstant, da die dem Motor zugeführte Energie der gesamten abgeführten Energie (inklusive Abstrahlungsverluste etc.) die Waage hält.

Lediglich etwa 10 bis 20 % der zum Agglomerieren des zu behandelnden Kunststoffes nötigen Energie wird über die Schnecke auf den Kunststoff eingebracht, der Hauptanteil dieser Energie wird dem Kunststoff im vom Behälter 1 bzw. dem in ihm umlaufenden Werkzeugen 3 gebildeten Zerreisser zugeführt.

Die Ausführungsform nach den Fig. 5 und 6 zeigt genauer die Verhältnisse am Austragkopf 18 bei einer gegenüber derAusführungsform nach Fig. 4 etwas geänderten Konstruktion: Das Verhältnis von L₂/D beträgt bei der Ausführungsform nach den Fig. 5 und 6 annähernd 0,95. Wie die Fig. 5 und 6 deutlich zeigen, sind im Bereich des Austragkopfes 18 in die innere Mantelwand des Gehäuseabschnittes 21 Nuten 33 eingearbeitet, deren in radialer Richtung gemessene Tiefe geringer ist als die in der gleichen Richtung gemessene Tiefe der zwischen den Rippen der Agglomerierschnecke 12 liegenden, das Gut führenden Kanäle. Die Richtung dieser Nuten 33 kann parallel zur Achse der Schnecke 12 verlaufen oder schräg zu dieser Richtung. Stets jedoch ist die Richtung dieser Nuten 33 so gewählt, daß sich diese Richtung mit der Richtung der Schneckengänge des Austragkopfes 18 kreuzt. Durch diese Kreuzung zwischen Nuten 33 und den Kanälen 26 zwischen den Gewindegängen des Austragkopfes 18 entstehen extreme Scherkräfte für die durch den Austragkopf 18 transportierte agglomerierte Masse. Gegebenenfalls in dieser Masse enthaltene Fremdteilchen werden daher zerrieben, was den Vorteil hat, daß der Austragsbereich des Austragkopfes 18 von Verstopfungen frei gehalten wird. Wie Fig. 5 zeigt, erstrecken sich die Nuten 33 nur über einen Teil der axialen Länge des Austragkopfes 18, und zwar etwa über jene Hälfte dieser Länge, welche an den Restteil der Schnecke 12 anschließt und in Abstand liegt von der Austrittsöffnung 11. Der Austragsbereich des Austragkopfes 18 ist daher lediglich von der zylindrischen Innenwand 34 des Gehäuseabschnittes 21 und den Gängen des Austragkopfes 18 begrenzt. Dies hat Bedeutung im Hinblick auf den Querschnitt der aus den Kanälen 26 zwischen den Gängen des Austragkopfes 18 austretenden Agglomeratstränge. Würden sich nämlich die Nuten 33 bis zum äußeren Stirnende 17 des Austragkopfes 18 erstrecken, so würde auch durch diese Nuten 33 Agglomeratgut austreten und durch die umlaufenden Messer 23 (Fig. 8, 9) zerkleinert werden. Da der Querschnitt der Nuten 33 hinsichtlich Form und Größe abweicht vom Querschnitt der Kanäle 26, hätte dies ungleichmäßige Querschnitte und damit ungleichmäßige Größen der mittels der Zerkleinerungsvorrichtung 22 erhaltenen Granulatteilchen zur Folge.

Wie Fig. 6 zeigt, können sowohl die Kanäle 26 als auch die Nuten 33 von Kreisbogen begrenzt sein, etwa derart, daß sich halbkreisförmige Querschnitte der Kanäle 26 bzw. der Nuten 33 ergeben. Noch günstiger ist es jedoch, wie Fig. 7 zeigt, die Nuten 33, im Schnitt normal zur Achse des Austragkopfes 18 gesehen, mit sägezahnartigem Profil auszubilden, wobei die Richtung der entstehenden Sägezähne so gewählt ist, daß die Zähne 35 dieses Profiles beim Umlauf des Austragkopfes 18 (Pfeil 36) zerkleinernd auf die von den Kanälen 26 des Austragkopfes 18 transportierte agglomerierte Masse wirksam werden.

Selbstverständlich kann, wie bereits erwähnt, eine Zerkleinerungsvorrichtung, wie sie in den Fig. 8 und 9 dargestellt ist, bei allen dargestellten Ausführungsformen Anwendung finden. Ebenso ist es möglich, die Zerkleinerungsvorrichtung 22 auch andersartig auszubilden, z.B. als Naßmühle, welcher die aus den Kanälen 26 austretenden Agglomeratstränge unmittelbar zugeleitet werden, sodaß die Gewinnung der Granulatteilchen im noch heißen Zustand der Stränge erfolgt.

Wie ebenfalls bereits erwähnt, bildet die mit den Werkzeugen 3 versehene umlaufende Rotorscheibe 4 eine Einrichtung 37 (Fig. 1 bis 3) zur stopfenden Befüllung des Gehäuses 8 der Agglomerierschnecke 12, sodaß das zu behandelnde Gut mit einer in Richtung des Pfeiles 38 gerichteten Bewegungskomponente durch die Einbringeöffnung 7 in das Gehäuse 8 eingedrückt wird. Eine solche Einrichtung 37 kann jedoch auch von einer Stopfschnecke gebildet sein, etwa derart, daß an die Einbringeöffnung 7 (Fig. 4) ein Einfülltrichter für das zu behandelnde Gut angeschlossen ist, in welchem die umlaufende Stopfschnecke so angeordnet ist, daß sich eine Eindrückwirkung auf das Gut in Richtung des Pfeiles 38 ergibt. Eine weitere Ausbildungsmöglichkeit für eine solche Stopfeinrichtung 37 besteht darin, an die Einbringeöffnung 7 einen Einwellen- oder Zweiwellen-Zerkleinerer anzuschließen, dessen umlaufende Messer eine Vorzerkleinerung des zu behandelnden Gutes bewirken und zugleich die erwähnte Stopfwirkung besorgen.

## Patentansprüche

1. Vorrichtung zum kontinuierlichen Agglomerieren von Kunststoffgut, insbesondere zu Recyclingzwecken, mit einer in einem Gehäuse (8) gelagerten, durch einen Antrieb (15) zu einer Drehbewegung um ihre Achse (27) angetriebenen Agglomerierschnecke (12), welche das Kunststoffgut lediglich zusammenbackt, aber nicht plastifiziert und der das zu behandelnde Gut durch eine Einbringeöffnung (7) des Gehäuses (8) zugeführt wird und die das agglomerierte Gut durch eine Austrittsöffnung (11) aus dem Gehäuse (8) ausdrückt, wobei das Verhältnis von wirksamer Länge (L₁) der Agglomerierschnecke zu ihrem Nenndurchmesser (D) kleiner ist als 16, **dadurch gekennzeichnet, daß** das Verhältnis von wirksamer Länge (L₁) der Schnecke (12) zu ihrem Nenndurchmesser (D) 4,5 bis 12 beträgt, und daß die Agglomerierschnecke (12) vor der von mehreren an der Stimseite des Gehäuses (8) angeordneten Kanälen (26) gebildeten Austrittsöffnung (11) einen mit der Agglomerierschnecke (12) mitdrehenden Austragkopf (18) aufweist, welcher die Kanäle (26) begrenzende Schneckengänge aufweist, deren Gangzahl größer ist als jene der Agglomerierschnecke (12), wobei das Gehäuse (8) im Bereich dieses Austragkopfes (18) an seiner Innenwand (34) Nuten (33) aufweist, deren Richtung sich mit jener der Schneckengänge des Austragkopfes (18) kreuzt und die in Abstand vom äußeren Stimende (17) des Austragskopfes (18) enden, sodaß dieser Austragskopf (18) das von der Agglomerierschnecke (12) bereits weitgehend agglomerierte Gut weiter verdichtet und agglomeriert und mehrere Agglomeratstränge aus den Kanälen (26) des Austragskopfes (18) austreten.

2. Vorrichtung nach Anspruch 1, **dadurch gekennzeichnet, daß** das Verhältnis von wirksamer Länge (L₁) der Schnecke (12) zu ihrem Nenndurchmesser (D) 4,5 bis 8,5 beträgt.

3. Vorrichtung nach Anspruch 1 oder 2, **dadurch gekennzeichnet, daß** an die Kanäle (26) eine Zerkleinerungsvorrichtung (22), insbesondere eine Granuliervorrichtung, für die aus den Kanälen (26) austretenden Agglomeratstränge unmittelbar angeschlossen ist.

4. Vorrichtung nach einem der Ansprüche 1 bis 3, **dadurch gekennzeichnet, daß** das Verhältnis von axialer Länge (L₂) des Austragkopfes (18) zum Nenndurchmesser (D) der Agglomerierschnecke (12) 0,4 bis 1 beträgt.

5. Vorrichtung nach einem der Ansprüche 1 bis 4, **dadurch gekennzeichnet, daß** die von den Schneckengängen des Austragkopfes (18) begrenzten Kanäle (26) in Summe ein Aufnahmevolumen haben, das geringer ist als jenes der Schneckengänge der, vorzugsweise eingängigen, Agglomerierschnecke (12).

6. Vorrichtung nach einem der Ansprüche 1 bis 5, **dadurch gekennzeichnet, daß** der Austragkopf (18) einen eigenen Bauteil bildet, der mit der restlichen Agglomerierschnecke (12) lösbar drehschlüssig verbunden ist.

7. Vorrichtung nach einem der Ansprüche 1 bis 6, **dadurch gekennzeichnet, daß** der Austragkopf (18) in einem eigenen Abschnitt (21) des Gehäuses (8) gelagert ist, der mit dem restlichen Gehäuseabschnitt lösbar, jedoch dicht, verbunden ist.

8. Vorrichtung nach einem der Ansprüche 1 bis 7, **dadurch gekennzeichnet, daß** das Profil der Nuten (33), im Schnitt normal zur Achse des Austragkopfes (18) gesehen, sägezahnartig verläuft.

9. Vorrichtung nach einem der Ansprüche 1 bis 8, **dadurch gekennzeichnet, daß** sich die Nuten (33) über einen von der Austrittsöffnung (11) in Abstand liegenden wesentlichen Abschnitt, z.B. etwa die Hälfte, der axialen Länge des Austragkopfes (18) erstrecken.

10. Vorrichtung nach einem der Ansprüche 1 bis 9, **dadurch gekennzeichnet, daß** der Querschnitt der Nuten (33) hinsichtlich Form und Größe vom Querschnitt der von den Schneckengängen des Austragkopfes (18) begrenzten Kanäle (26) abweicht.

11. Vorrichtung nach einem der Ansprüche 1 bis 10, **dadurch gekennzeichnet, daß** die Nuten (33) geringere Tiefe haben als die von den Gängen der Agglomerierschnecke (12) gebildeten Kanäle.

12. Vorrichtung nach einem der Ansprüche 1 bis 11, **dadurch gekennzeichnet, daß** die Einbringeöffnung (7) in Strömungsverbindung mit einer Einrichtung (37) steht, die das zu agglomerierende Gut in die Einbringeöffnung (7) stopft.

13. Vorrichtung nach Anspruch 12, **dadurch gekennzeichnet, daß** das Gehäuse (8) der Agglomerierschnecke (12) tangential an einen Behälter (1) angeschlossen ist, in dessen Bodenbereich um eine vertikale Achse (9) umlaufende Messer angeordnet sind, wobei der Antrieb für die Agglomerierschnecke (12) und der Antrieb (15) für die Zerkleinerungsvorrichtung (22) für das agglomerierte Kunststoffgut an einander entgegengesetzten Stirnenden des Gehäuses (8) angeordnet sind.

14. Verfahren zum kontinuierlichen Agglomerieren von Kunststoffgut mitfels einer zur Drehbewegung um ihre Achse (27) angetriebenen Agglomerierschnecke (12), die das agglomerierte Gut aus ihrem Gehäuse (8) ausdrückt und ein Verhältnis von wirksamer Länge (L₁) zu Nenndurchmesser (D) hat, das kleiner ist als 16, **dadurch gekennzeichnet, daß** die Agglomerierschnecke (12), deren Verhältnis von wirksamer Länge (L₁) zu Nenndurchmesser (D) 4,5 bis 12 beträgt, das Gut weitgehend agglomeriert und zu einem an sie anschließenden Austragkopf (18) fördert, der mit der Agglomerierschnecke (12) mitgedreht wird und Schneckengänge hat, deren Gangzahl größer ist als jene der Agglomerierschnecke (12), sodaß die Schneckengänge des Austragkopfes (18) das Gut weiter verdichten und agglomerieren, wobei mittels im Abstand vom äußeren Stimende des Austragkopfes (18) endender Nuten (33) in der den Austragkopf (18) umgebenden Wand des Gehäuses (8) eine Scherwirkung auf das Gut ausgeübt wird.

15. Verfahren nach Anspruch 14, **dadurch gekennzeichnet, daß** die Scherwirkung mittels Nuten (33) erzeugt wird, die einen sägezahnartigen Querschnitt haben.

## Claims

1. A device for continuously agglomerating plastic material, particularly for recycling purposes, comprising an agglomerating screw (12) supported in a housing (8) and being driven to rotate about its axis (27) by drive means (15), said agglomerating screw packing said plastic material only, but not plastifying it, while the material to be treated is supplied to it through an inlet opening (7) of said housing (8) and it presses said material after having been agglomerated out of said housing (8) through an outlet opening (11), the ratio of the effective length (L₁) of said agglomerating screw to its nominal diameter (D) being smaller than 16, **characterised in that** the ratio of the effective length (L₁) of said screw (12) to its nominal diameter (D) is 4.5 to 12, and that said agglomerating screw (12) comprises a discharge head (18) rotating together with said agglomerating screw (12) before said outlet opening (11) formed by a plurality of channels (26) situated at the front side of said housing (8), said discharge head having channel (26) delimiting augers whose number of threads is greater than that of said agglomerating screw (12), the inner wall (34) of said housing (8) including grooves (33) within the region of said discharge head (18) whose direction crosses that of said augers of said discharge head (18) and which terminate in a distance from the outer front end (17) of said discharge head (18) so that said discharge head (18) further compacts and agglomerates the material that has already been agglomerated to a high extent by said agglomerating screw (12), while a plurality of agglomerated strands leave said channels (26) of said discharge head (18).

2. Device according to claim 1, **characterised in that** the ratio of the effective length (L₁) of said screw (12) to its nominal diameter (D) is 4.5 to 8.5.

3. Device according to claim 1 or 2, **characterised in that** a comminuting device (22), particularly a granulating device, for the agglomerated strands exiting said channels (26) is immediately adjoined to said channels (26).

4. Device according to any of claims 1 to 3, **characterised in that** the ratio of the axial length (L₂) of said discharge head (18) to the nominal diameter (D) of said agglomerating screw (12) is 0.4 to 1.

5. Device according to any of claims 1 to 4, **characterised in that** the channels (26) delimited by said augers of said discharge head (18) have a total receiving volume smaller than that of the threads of said, preferably single treaded, agglomerating screw (12).

6. Device according to any of claims 1 to 5, **characterised in that** said discharge head (18) forms a separate component releasably connected to the remainder of said agglomerating screw (12) for common rotation.

7. Device according to any of claims 1 to 6, **characterised in that** said discharge head (18) is supported within a separate section (21) of said housing (8) and is relasably, but tightly, connected to the remaining housing section.

8. Device according to any of claims 1 to 7, **characterised in that** the profile of said grooves (33), when seen in a cross-section perpendicular to the axis of said discharge head (18), has the shape of saw teeth.

9. Device according to any of claims 1 to 8, **characterised in that** said grooves (33) extend over a substantial portion, e.g. a half, of the axial length of said discharge head (18), said portion being spaced from said outlet opening (11).

10. Device according to any of claims 1 to 9, **characterised in that** the shape and size of the cross-section of said grooves (33) differs from the cross-section of said channels (26) delimited by said augers of said discharge head (18).

11. Device according to any of claims 1 to 10, **characterised in that** said grooves (33) have a depth smaller than the channels formed by the threads of said agglomerating screw (12).

12. Device according to any of claims 1 to 11, **characterised in that** said inlet opening (7) communicates with a device (37) which tamps the material to be agglomerated into said inlet opening (7).

13. Device according to claim 12, **characterised in that** said housing (8) of said agglomerating screw (12) is tangentially connected to a container (1) where knives rotating about a vertical axis (9) are located in the bottom region, said drive means for said agglomerating screw (12) and the drive means (15) for said comminuting device (22) for the agglomerated plastic material being arranged at opposite front ends of said housing (8).

14. A method for continuously agglomerating plastic material by means of a agglomerating screw (12), rotationally driven about its axis (27), which presses the agglomerated material out of its housing (8) and has a ratio of its effective length (L₁) to nominal diameter (D) smaller than 16, **characterised in that** said agglomerating screw (12), whose ratio of effective length (L₁) to nominal diameter (D) is 4.5 to 12, agglomerates said material to a large extent and supplies it to an adjoining discharge head (18) which is rotated together with said agglomerating screw (12) and has augers, the number of which is greater than that of said agglomerating screw (12) so that the augers of said discharge head (18) compact and agglomerate said material further, a shearing action being effected onto said material by grooves (33) within the wall of the housing (8) surrounding said discharge head (18) which terminate in a distance from the outer front end of said discharge head (18).

15. Method according to claim 14, **characterised in that** the shearing action is effected by grooves (33) having a cross-section in the shape of saw teeth.

## Revendications

1. Dispositif pour l'agglomération en continu de produits en matière plastique, notamment à des fins de recyclage, comprenant une vis d'agglomération (12) logée dans un boîtier (8) et étant entraînée à tourner autour son axe (27) par un moyen d'entraînement, ladite vis seulement prenant la matière plastique en masse sans le plastifier, à laquelle la matière à traiter est amenée par une ouverture d'introduction (7) du boîtier (8) et qui exprime la matière agglomérée hors du boîtier (8) par un orifice de sortie (11), le rapport de la longueur effective (L₁) de la vis d'agglomération à son diamètre nominal (D) étant plus petit que 16, **caractérisé en ce que** le rapport de la longueur effective (L₁) de la vis (12) à son diamètre nominal (D) est 4,5 à 12, et que la vis d'agglomération (12) comprend, avant l'orifice de sortie (11) formé par plusieurs passages (26) situées au côté frontal du boîtier (8), une tête d'extraction (18), qui toume conjointement avec ladite vis d'agglomération (12) et qui présente des spires de vis délimitant lesdits passages (26) et dont le nombre de spires et plus grand que celui-ci de ladite vis d'agglomération (12), la paroi inteme (34) du boîtier (8) ayant des rainures (33) dans la zone de ladite tête d'extraction (18), dont la direction se croise avec celle des spires de vis de la tête d'extraction (18) et qui se terminent dans une distance de l'extrémité frontale (17) de la tête d'extraction (18), de manière que ladite tête d'extraction (18) comprime et agglomère encore la matière déjà agglomérée considérablement par la vis d'agglomération (12), et que plusieurs boudins sortent des passages (26) de la tête d'extraction (18).

2. Dispositif selon la revendication 1, **caractérisé en ce que** le rapport de la longueur effective (L₁) de la vis (12) à son diamètre nominal (D) est 4,5 à 8,5.

3. Dispositif selon la revendication 1 ou 2, **caractérisé en ce qu'**un dispositif de fragmentation (22), particulièrement un dispositif granulateur, pour les boudins d'agglomérat, qui sortent des passages (26), est raccordé immédiatement auxdites passages (26).

4. Dispositif selon une quelconque des revendications 1 à 3, **caractérisé en ce que** le rapport de la longueur axiale (L₂) de la tête d'extraction (18) au diamètre nominal (D) de la vis d'agglomération (12) est 0,4 à 1.

5. Dispositif selon une quelconque des revendications 1 à 4, **caractérisé en ce que** la totalité des passages (26) délimitées par les spires de vis de la tête d'extraction (18) ont un volume de captage plus petit que celui-ci des spires de la vis d'agglomération (12), préférablement à pas simple.

6. Dispositif selon une quelconque des revendications 1 à 5, **caractérisé en ce que** la tête d'extraction (18) forme un élément séparé raccordé d'une manière détachable à la vis d'agglomération (12) restante pour une rotation commune.

7. Dispositif selon une quelconque des revendications 1 à 6, **caractérisé en ce que** la tête d'extraction (18) est logée dans un segment séparé (21) du boîtier (8) qui est raccordé d'une manière détachable, mais étanche, au segment de boîtier restant.

8. Dispositif selon une quelconque des revendications 1 à 7, **caractérisé en ce que** le profil des rainures (33), vu en coupe perpendiculaire à l'axe de la tête d'extraction (18), est en dents de scie.

9. Dispositif selon une quelconque des revendications 1 à 8, **caractérisé en ce que** les rainures (33) s'étendent sur un segment substantiel, par exemple la moitié, de la longueur axiale de la tête d'extraction (18), qui se trouve dans une distance de l'orifice de sortie (11).

10. Dispositif selon une quelconque des revendications 1 à 9, **caractérisé en ce que** la forme et la dimension d'une coupe en travers des rainures (33) diffèrent de la coupe en travers des passages (26) délimitées par les spires de vis de la tête d'extraction (18).

11. Dispositif selon une quelconque des revendications 1 à 10, **caractérisé en ce que** les rainures (33) ont une profondeur plus petite que les passages formées par les spires de la vis d'agglomération (12).

12. Dispositif selon une quelconque des revendications 1 à 11, **caractérisé en ce que** l'ouverture d'introduction (7) est en communication avec un dispositif (37), qui rempli la matière à agglomérer dans l'ouverture d'introduction (7).

13. Dispositif selon la revendication 12, **caractérisé en ce que** le boîtier (8) de la vis d'agglomération (12) est raccordé tangentiellement à un récipient (1), ou des couteaux tournant autour d'un axe vertical (9) sont disposés dans la zone de fond, le moyen d'entraînement de la vis d'agglomération (12) et le moyen d'entraînement (15) du dispositif de fragmentation (22) pour la matière plastique agglomérée étant situés aux extrémités frontales opposées du boîtier (8).

14. Procédé pour l'agglomération en continu de produits en matière plastique au moyens d'une vis d'agglomération (12) entraînée à tourner autour son axe (27), qui exprime la matière agglomérée hors de son boîtier (8) et a un rapport de la longueur effective (L₁) au diamètre nominal (D) plus petit que 16, **caractérisé en ce que** la vis d'agglomération (12), dont le rapport de la longueur effective (L₁) au diamètre nominal (D) est 4,5 à 12, agglomère la matière de manière considérable et la transporte à une tète d'extraction (18) reliée, qui tourne conjointement avec ladite vis d'agglomération (12) et comprend des spires de vis, dont le nombre est plus grand que celui-ci de la vis d'agglomération (12), de manière que les spires de la tête d'extraction (18) compriment et agglomèrent la matière ultérieurement, une action de cisaillement étant effectuée à la matière au moyens des rainures (33) dans la paroi du boîtier, qui entoure la tête d'extraction (18) et qui se terminent dans une distance de l'extrémité frontale de la tête d'extraction (18).

15. Procédé selon la revendication 14, **caractérisé en ce que** l'action de cisaillement se produit au moyens des rainures (33) ayant une coupe en travers en dents de scie.
